# EUROPÄISCHE PATENTANMELDUNG

(11) **EP 2 337 195 A2**
(43) Veröffentlichungstag der Anmeldung: **22.06.2011**
(21) Anmeldenummer: 10189031.7
(22) Anmeldetag: 27.10.2010
(51) Int. Cl.: H02K 41/03

(54) **Linearantrieb mit verbesserter Wirbelstromunterdrückung**

(30) Priorität: 18.12.2009 DE 102009054992; 21.12.2009 DE 102009055103
(71) Anmelder: Robert Bosch GmbH, 70442 Stuttgart (DE)
(72) Erfinder: Kohlhammer, Susanne, 70197, Stuttgart (DE); Reutlinger, Kurt, 70174, Stuttgart (DE); Heidrich, Markus, 71229, Leonberg (DE)

(57) **Zusammenfassung**

Die Erfindung betrifft eine Statoranordnung für eine lineare elektrische Maschine (1), mit einem im wesentlichen hülsenförmigen Statorkörper (2; 20), der eine Anordnung aus einem oder mehreren Blechen (12; 21) umfasst,
wobei das eine oder die mehreren Bleche (12; 21) sich zwischen einer Innenseite und einer Außenseite des hülsenförmigen Statorkörpers (2; 20) erstrecken, von einer radialen Richtung des Statorkörpers (2; 20) in einer Umfangsrichtung des Statorkörpers abweichen und weiterhin eine Krümmung in Richtung der Umfangsrichtung aufweisen.

## Beschreibung

### Technisches Gebiet

Die Erfindung betrifft Linearantriebe, insbesondere den Aufbau von Komponenten von Linearantrieben, wie z.B. Statoren und Läufern. Die Erfindung betrifft den Aufbau der Komponenten durch die Anordnung von Blechen.

### Stand der Technik

Linearantriebe können durch elektrische Ansteuerung einen Läufer linear bewegen, ohne dass eine mechanische Umsetzung zum Wandeln einer rotatorischen Bewegung in eine Linearbewegung benötigt wird. Solche Linearantriebe sind vorteilhaft, da durch sie Bauraum eingespart werden kann und aufgrund ihrer geringeren Masse und geringeren Reibung die Effizienz des Antriebssystems erhöht werden kann. Anwendungsgebiete für derartige Linearantriebe sind beispielsweise Verdichter (z. B. Klimakompressoren), Ventilantriebe, Injektoren oder Lineargeneratoren bei Kraft-Wärme-Kopplungsanlagen.

Eine häufige Ausbildung eines derartigen Linearantriebs umfasst einen im Wesentlichen zylinderförmigen permanentmagnetbesetzten Läufer, der zur Reduktion der bewegten Masse häufig als Hohlzylinder ausgeführt ist, und einen den Läufer umgebenden Außenstator. Der Außenstator weist einen im Wesentlichen zylindrischen Hohlraum auf, um den Läufer aufzunehmen. Zwischen dem Stator und dem Läufer befindet sich ein Luftspalt. Im Inneren des Läufers ist ein zylindrischer Innenstator vorgesehen, der als Führung des Läufers dient und einen magnetischen Rückschluss für die Permanentmagnete des Läufers darstellt. Der Statorkörper des Außenstators weist einen Außenmantel auf, der als magnetischer Rückschluss dient, und mehrere, von dem Außenmantel nach innen stehende, in Umfangsrichtung umlaufende Statorzähne, zwischen denen ringförmige Spulen eingelegt sind. Derartige Linearantriebe sind beispielsweise aus US 2008/0185982 A1 und DE 10 2006 058 073 A1 bekannt.

Wie auch bei rotatorischen Antrieben, ist bei Linearantrieben ein wesentlicher Verlustmechanismus durch Wirbelströme bedingt. Wirbelströme bilden sich aufgrund von Magnetfeldänderungen durch Induktion von Spannungen aus. Die Wirbelströme verlaufen dabei um die Magnetfeldlinien. Zur Unterdrückung von Wirbelströmen in den Komponenten des Linearantriebs muss die elektrische Leitfähigkeit entlang der Wirbelstrompfade niedrig sein. Gleichzeitig soll jedoch die Sättigungsinduktion, d.h. der maximale magnetische Fluss, den das Material aufnehmen kann, hoch sein. Insgesamt sollen die Kosten möglichst gering gehalten werden. Um diese widersprüchlichen Forderungen zu erfüllen, werden üblicherweise Elektrobleche verwendet. Die Bleche werden dabei so angeordnet, dass die Blechebenen senkrecht zu den sich ausbildenden Wirbelströmen angeordnet sind, also im Wesentlichen in der Ebene der Richtung des Magnetfeldes liegen.

Der Stator des in der Druckschrift US 2008/018 5982 A1 gezeigten Linearantriebs wird aus scheibenförmigen Blechen zusammengesetzt, die in axialer Richtung des Linearantriebs gestapelt sind. Eine scheibenförmige Blechung des Statorkörpers unterdrückt die Wirbelströme im Rückschlussbereich jedoch kaum, da der magnetische Fluss dort im Wesentlichen parallel zur Achsrichtung verläuft, so dass die Ebene der Wirbelströme parallel zu den Blechebenen verläuft und die betreffenden Strompfade somit niederohmig sind.

Bei dem oben beschriebenen Linearantrieb verläuft der magnetische Fluss und somit auch das Magnetfeld im Wesentlichen in Ebenen, die sich in radialer und axialer Richtung erstrecken, d.h. mit der Zylinderkoordinate ϕ = konstant. Zur optimierten Unterdrückung von Wirbelströmen und optimierten Volumennutzung bei einem Aufbau mit Elektroblechen müsste der Statorkörper aus keilförmigen Blechelementen aufgebaut sein, was jedoch einen sehr hohen Fertigungsaufwand aufgrund der variierenden Dicke der Bleche führen würde. Alternativ können die Bleche radial zur Mittenachse des Stators sternförmig angeordnet sein. Dabei stoßen die Bleche nur an der Innenseite aneinander, während radial weiter nach außen der Abstand zwischen den Blechen größer wird. Der Abstand zwischen den Blechen bei dieser Anordnung stellt einen nicht genutzten Querschnitt dar, der zur Führung des magnetischen Flusses im Wesentlichen verloren geht.

Alternativ können die Komponenten auch aus einem massiven Material mit intrinsisch schlechter elektrischer Leitfähigkeit gefertigt werden, wie beispielsweise FeCo oder einem Pulververbundwerkstoff. Diese Materialien haben jedoch den Nachteil, dass sie sehr teuer und gleichzeitig spröde sind oder eine verglichen mit Elektroblechen niedrigere Sättigungsinduktion aufweisen. Auch sind derartige Komponenten aufwändiger herzustellen.

Es ist daher Aufgabe der vorliegenden Erfindung, eine Komponente für einen Linearantrieb zur Verfügung zu stellen, die eine Anordnung von Blechen aufweist, mit der eine gute Wirbelstromunterdrückung bei gleichzeitig hoher Sättigungsinduktion erreicht werden kann.

### Offenbarung der Erfindung

Diese Aufgabe wird durch die Statoranordnung für eine lineare elektrische Maschine gemäß Anspruch 1 sowie durch die lineare elektrische Maschine gemäß dem nebengeordneten Anspruch gelöst.

Weitere vorteilhafte Ausgestaltungen sind in den abhängigen Ansprüchen angegeben.

Gemäß einem ersten Aspekt ist eine Statoranordnung für eine lineare elektrische Maschine vorgesehen. Die Statoranordnung umfasst einen im wesentlichen hülsenförmigen Statorkörper, der eine Anordnung aus einem oder mehreren Blechen umfasst, wobei das eine oder die mehreren Bleche sich zwischen einer Innenseite und einer Außenseite des hülsenförmigen Statorkörpers erstrecken, von einer radialen Richtung des Statorkörpers in einer Umfangsrichtung des Statorkörpers abweichen und weiterhin eine Krümmung in Richtung der Umfangsrichtung aufweisen.

Eine Idee der obigen Statoranordnung besteht darin, den Stator einer linearen elektrischen Maschine so auszubilden, dass in der Ebene, in der die Wirbelströme auftreten, möglichst viele Grenzflächen zwischen den Flächen eines oder mehrerer Bleche liegen. Dies wird beispielsweise für die magnetischen Rückschlussbereiche, in denen die Feldlinien überwiegend in axialer Richtung verlaufen, durch Vorsehen eines zylinderförmigen Statorkörpers erreicht, bei dem ein oder mehrere Bleche einen Hohlraum teilweise oder vollständig umgeben. Dadurch ist es möglich, eine bessere Volumennutzung beim Aufbau des Statorkörpers im Vergleich zum Stand der Technik zu erreichen und gleichzeitig die Wirbelströme in einer Ebene senkrecht zur Mittenachse des hohlzylindrischen Statorkörpers zu unterbinden.

Weiterhin kann sich das eine oder die mehreren Bleche in axialer Richtung des Statorkörpers erstrecken.

Gemäß einer Ausführungsform kann mindestens ein Blech vorgesehen sein, dass spiralförmig um einen inneren Hohlraum des Statorkörpers gewickelt ist.

Gemäß einer weiteren Ausführungsform können mehrere Bleche vorgesehen sein, die sich eine sich von einer Innenseite zur Außenseite stetig ändernde Krümmung aufweisen, um eine Evolventenanordnung der Bleche auszubilden.

Insbesondere können die mehreren Bleche jeweils einen kammartigen Blechschnitt mit einer Basis und mit von der Basis abstehenden Zinken aufweisen, wobei ein Basisende der Bleche, das den Zinken des kammartigen Blechschnitts gegenüberliegt, an der Innenseite oder Außenseite des zylinderförmigen Statorkörpers angeordnet sind und ein Zinkenende, das dem Basisende gegenüberliegt, an der jeweils anderen Innenseite bzw. Außenseite angeordnet ist, wobei die Bleche so aneinander anliegen, dass die Zinken sich in Umfangsrichtung des Statorkörpers überdecken. Somit kann erreicht werden, dass Statorzähne durch Stapelung der Zinken übereinander ausgebildet werden.

Es können mehrere Statorzahnbleche mit einer Innenausnehmung vorgesehen sein, die in axialer Richtung gestapelt sind und konzentrisch zu der Statoranordnung angeordnet sind, so dass eine Kante der Statorzahnbleche an dem Statorkörper anliegt, so dass die Anordnung gestapelter Statorzahnbleche einen in sich in Umfangsrichtung erstreckenden Statorzahn bildet. Dies ist vorteilhaft, da im Gegensatz zu den Rückschlussbereichen die Magnetfeldlinien in den Zahnbereichen in radialer Richtung verlaufen.

Gemäß einer weiteren Ausführungsform können mehrere Anordnungen gestapelter Statorzahnbleche wechselweise mit mehreren schleifenförmigen, in Umfangsrichtung verlaufenden Statorspulen im inneren Hohlraum des Statorkörpers gestapelt sein.

Gemäß einem weiteren Aspekt ist eine lineare elektrische Maschine mit der obigen Statoranordnung und einem in axialer Richtung des Statorkörpers beweglichen Läufer vorgesehen.

Weiterhin kann die Statoranordnung in einem Innenstator und/oder in einem Außenstator der elektrischen Maschine umfasst sein.

### Kurzbeschreibung der Zeichnungen

Bevorzugte Ausführungsformen werden nachfolgend anhand der beigefügten Zeichnungen näher erläutert. Es zeigen:
- Figur 1: eine schematische Querschnittsdarstellung durch einen Stator eines Linearantriebs;
- Figur 2: eine perspektivische Schnittdarstellung durch einen Ausschnitt eines Linearantriebs mit einer Blechung des Statorkörpers gemäß einer ersten Ausführungsform;
- Figur 3: eine Querschnittsdarstellung durch eine Statorkörperhülse in einer Ebene senkrecht zur Mittenachse des zylinderförmigen Stators;
- Figur 4: eine schematische Querschnittsdarstellung zur Veranschaulichung des Aufbaus einer weiteren Ausführungsform des Statorkörpers mit mehreren Blechen;
- Figur 5: eine Darstellung des Blechschnitts zur Verwendung zur Herstellung des Statorkörpers nach Figur 4; und
- Figur 6: eine Darstellung des Aufbaus eines Stators mit einem segmentierten Statorkörper.

### Beschreibung von Ausführungsformen

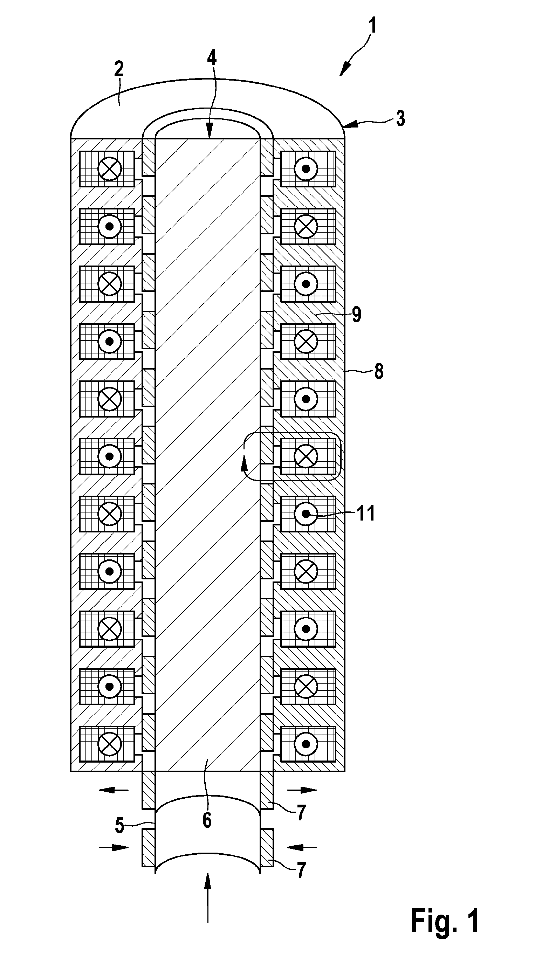

In Figur 1 ist eine Querschnittsdarstellung durch einen Linearantrieb 1 gezeigt. Der Linearantrieb 1 weist einen Statorkörper 2 eines Außenstators 3 auf, der im Wesentlichen zylindrisch ausgebildet ist und einen inneren Hohlraum 4 definiert. Im gezeigten Ausführungsbeispiel ist ein Innenstator 6 vorgesehen, der ebenfalls zylinderförmig ausgebildet ist und konzentrisch zu dem Außenstator 3 angeordnet ist. Zwischen dem Innenstator 6 und dem Außenstator 3, die eine Statoranordnung bilden, ist in dem Hohlraum 4 ein Läufer 5 angeordnet ist, der sich in axialer Richtung des zylinderförmigen Stators 3 bewegen kann. Der Läufer 5 ist beispielsweise hohlzylindrisch (hülsenförmig) ausgebildet und umgibt den Innenstator 6, so dass der Innenstator 6 den Läufer 5 führt. Alternativ kann auf den Innenstator verzichtet werden und der Läufer 5 mit einem innenliegenden Joch ausgebildet sein.

Der Läufer 5 ist mit mehreren Permanentmagneten 7 versehen, die jeweils den Läufer in Umfangsrichtung ganz oder teilweise umgeben bzw. ringförmig ausgebildet sind. Die Magnetpole der Permanentmagneten 7 sind in radialer Richtung ausgerichtet, so dass in einer Ebene senkrecht zur axialen Richtung in radialer Richtung das Magnetfeld nur in eine Richtung verläuft. Längs der axialen Richtung benachbarte Permanentmagnete 7 weisen üblicherweise eine zueinander entgegengesetzte Polung auf. Der Innenstator 6 dient dazu, für diese Permanentmagnete 7 einen magnetischen Rückschluss zu bilden. Selbstverständlich kann der Läufer auch auf andere Art ausgebildet sein, z.B. mit in axialer Richtung ausgebildeten Permanentmagneten, als Läufer eines Reluktanzmotors und dergleichen.

Der Statorkörper 2 des Außenstators 3 weist eine Außenwand 8 auf, von der Statorzähne 9 in radialer Richtung in den Hohlraum 4 abstehen. Die Statorzähne 9 sind umlaufend ausgebildet. Zwischen benachbarten Statorzähnen 9 sind ringförmige Statorspulen 11 eingelegt, deren Wicklungsebene im Wesentlichen senkrecht zur axialen Richtung des zylinderförmigen Stators 1, d.h. senkrecht zur Bewegungsachse liegt.

Ein wesentlicher Verlustmechanismus bei elektromagnetischen Antrieben sind Wirbelströme, die in den nicht-elektrischen Komponenten des Linearantriebs 1 entstehen. Diese bilden sich aus Magnetfeldänderungen und verlaufen schleifenförmig um die Magnetfeldlinien, d.h. senkrecht dazu. Zur Unterdrückung von Wirbelströmen muss im Allgemeinen die elektrische Leitfähigkeit entlang der Wirbelstrompfade niedrig sein. Gleichzeitig soll jedoch die Sättigungsinduktion, d.h. der magnetische Fluss, den das Material aufnehmen kann, hoch sein.

Üblicherweise wird die Leitfähigkeit dadurch verringert, dass die Antriebskomponenten in Blechen ausgebildet sind, die so gestapelt sind, dass die aufeinander liegenden Blechlagen gegeneinander elektrisch isoliert sind. Jedoch würde ein solcher herkömmlicher Aufbau aus Blechen bei dem Statorkörper 2 des Außenstators 3 dazu führen, dass die Blechebene senkrecht zur Achsrichtung des zylinderförmigen Stators verläuft. Für einen solchen Aufbau könnten daher Wirbelströme, die sich aufgrund des Magnetfelds im Rückschlussbereich des Statorkörpers 2 ausbilden, nicht unterdrückt werden, da sich diese in der Ebene der Bleche ausbilden.

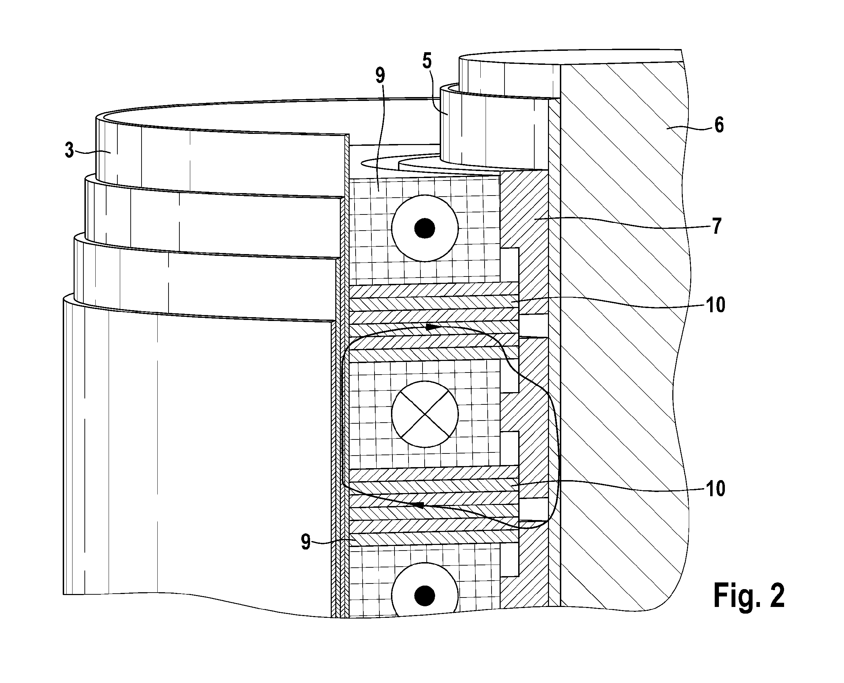

Um Wirbelströme, insbesondere in einem in axialer Richtung des Linearantriebs verlaufenden Rückschlußbereich zu unterdrücken, wird daher, wie in der perspektivischen Darstellung eines Ausschnitts durch einen Linearantrieb in der Fig. 2 dargestellt ist, der zylinderförmige Statorkörper 2 des Außenstators 3 mit einem spiralförmig um einen zur Mittenachse konzentrischen inneren Hohlraum gewickelten Blech ausgebildet, so dass eine hülsenförmige Komponente als Statorkörperhülse ausgebildet wird. Diese Komponente kann als Teil eines Statorkörpers 2 verwendet werden, insbesondere als hülsenförmige Außenwand. Da die hülsenförmige Außenwand des Statorkörpers 2, d.h. die Statorkörperhülse, den Rückschlussbereich bildet, können dort somit wirksam Wirbelströme unterdrückt werden. Denn in der Ebene senkrecht zur Mittenachse stoßen aufgrund der spiralförmigen Anordnung mehrere Blechgrenzflächen aneinander, ohne dass eine elektrische Kontaktierung erfolgt, die eine Ausbreitung von Wirbelströmen erlauben würde.

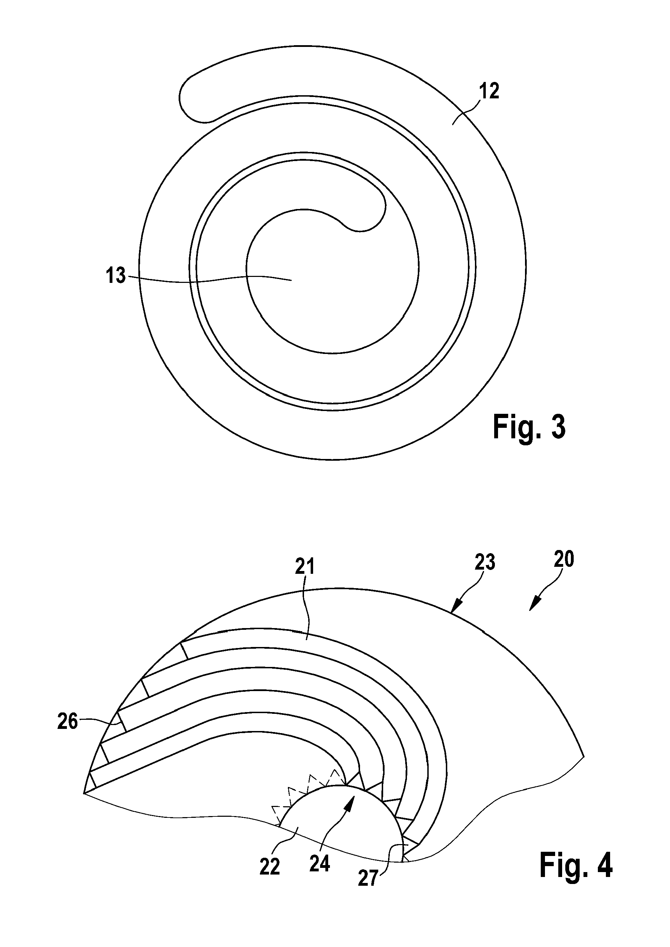

In Figur 3 ist schematisch die Statorkörperhülse im Querschnitt dargestellt. Man erkennt, dass die Statorkörperhülse aus einem einzigen Blech 12 ausgebildet ist, das einen Innenbereich 13 umgibt. Da die Wirbelströme im Wesentlichen in der in Figur 3 gezeigten Fläche verlaufen, wird deutlich, dass in dieser Ebene Wirbelströme wirksam unterdrückt werden können.

Zum Ausbilden der Statorzähne 9 werden im Inneren der Statorkörperhülse mehrere Lagen von Statorzahnblechen 10 eingelegt, die einen Blechstapel bilden. Die Anordnung des Blechstapels für die Statorzähne 9 im Inneren des hülsenförmigen Körpers ist geeignet, die in den Statorzähnen 9 generierten Wirbelströme zu unterdrücken, da dort das Magnetfeld bezüglich des Linearantriebs in radialer Richtung verläuft und somit Wirbelströme in einer Ebene senkrecht dazu generiert. Eine Richtungskomponente dieser Ebene entspricht jedoch der Normalenrichtung für die Statorzahnbleche 10 der Statorzähne 9 und schneidet damit die Grenzflächen zwischen den einzelnen Statorzahnblechen 10, was zu einer guten Wirbelstromunterdrückung in den Statorzähnen 9 führt.

Im Inneren der Statorkörperhülse werden die Blechstapel aus den Statorzahnblechen 10 und die den inneren Hohlraum des Stators 3 umgebende ringförmigen Statorspulen 11 angeordnet. So kann durch aufeinanderfolgende Schichtung von gestapelten Statorzahnblechen 10 und ringförmigen Statorspulen 11 die Statorzahnanordnung im Inneren des Stators 3 ausgebildet werden.

Die gefertigten Statorzähne aus den Statorzahnblechen 10 können mit der Spule in Kunststoff vergossen zusammen eingesetzt und fixiert werden. Die aufeinander gestapelten Statorzahnbleche 10 dürfen nicht gegeneinander verrutschen, was sich beispielsweise durch Einkerbungen und entsprechende Gegenstücke im jeweils benachbarten Statorzahnblech 10 verhindern lässt.

In Figur 4 ist eine schematische Darstellung einer Draufsicht auf einen Querschnitt einer weiteren Ausführungsform eines Statorkörpers 20 dargestellt. Der Statorkörper 20 ist aus mehreren Einzelblechen 21 aufgebaut. Die Einzelbleche 21 werden gemäß einer Evolventenanordnung um einen innenliegenden zylindrischen Hohlraum 22 angeordnet, wobei jedes der Einzelbleche 21 mit einem Basisende 26 an einer Außenseite 23 der Statorkörperhülse 20 und einem Kammende 27 an einer Innenseite 24 der Statorkörperhülse 20 angeordnet ist.

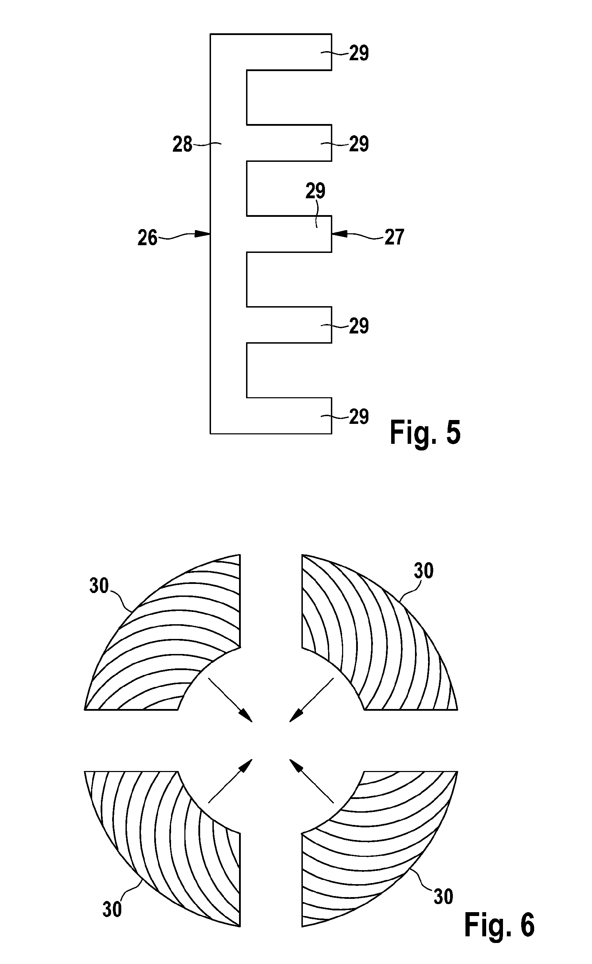

In Figur 5 ist ein Blechschnitt für ein solches Einzelblech 21 zur Bildung des Statorkörpers 20 gemäß Figur 4 dargestellt. Das Einzelblech 21 weist eine kammartige Struktur mit einer Basis 28 und Zinken 29 auf. Eine den Zinken 29 des Kamms gegenüberliegende Seite der Basis 28 des Einzelblechs 21 entspricht dem Basisende 26 des Einzelbleches 21, während die äußeren Enden der Zinken 29 des kammförmigen Einzelblechs 21 das Kammende 27 definieren. Beim Aufbau des Statorkörpers 20 werden diese kammartigen Einzelbleche 21 somit mit entsprechender Krümmung aufeinander gelegt, so dass das Basisende 26 des Einzelblechs 21 einen Abschnitt der Außenseite des Statorkörpers 20 und ein Kammende 27 des Einzelblechs 21 einen Abschnitt der Innenseite des Statorkörpers 20 definieren.

Auf diese Weise wird durch Verwenden von Einzelblechen 21 mit identischen Blechschnitten ein Statorkörper geschaffen, der eine gute Unterdrückung von Wirbelströmen sowohl in den Statorzähnen, die durch die Blechlagen der Zinken 29 der Einzelbleche 21 gebildet sind als auch im hülsenförmigen äußeren Rückschlussbereich erreicht.

Die Einzelbleche 21 weisen eine Krümmung auf, so dass die Einzelbleche 21 flächig aneinander anliegend angeordnet sind, wobei die Enden der Einzelbleche 21 die Innenseite und die Außenseite des Statorkörpers bilden. Insbesondere sind die Bleche so in der Statorkörperhülse 20 angeordnet, dass diese unter einem ersten Winkel an der Innenseite 24 bezüglich einer radialen Richtung der Statorkörperhülse 20 enden und an der Außenseite 23 der Statorkörperhülse 20 unter einem zweiten Winkel bezüglich der radialen Richtung enden, wobei der zweite Winkel größer ist als der erste Winkel.

Weiterhin kann die Krümmung jedes der Einzelbleche 21 von der Innenseite der Statorkörperhülse 20 hin zur Außenseite der Statorkörperhülse 20 abnehmen. Vorzugsweise ist der erste Winkel der Einzelbleche 21 an der Innenseite des Statorkörperhülse kleiner als 30° bezüglich der radialen Richtung, vorzugsweise zwischen 0° und 20°, und der zweite Winkel größer als 60°, vorzugsweise zwischen 80° und 90°.

Für die Herstellung des Statorkörpers werden die Bleche mit Hilfe beispielsweise einer Presse in Form gebogen, wonach diese in Segmente 30 paketiert werden können, wie dies beispielsweise in Figur 6 dargestellt ist. Die Anordnung der Einzelbleche der Segmente 30 entspricht im Wesentlichen der der Fig. 4. Die Segmente 30 können beispielsweise 90°-Segmente darstellen. Diese Segmente 30 können durch aneinander Anordnen der Einzelbleche und Zuschneiden in axialer Richtung der Segmente ausgebildet werden. Diese Segmente 30 können nach dem Einbringen der Statorspulen zusammengesetzt werden, um einen umlaufenden ringförmigen Statorkörper 20 mit umlaufenden Statorzähnen auszubilden.

Der Innenstator 4 des Linearantriebs 1 kann ebenfalls durch ein spiralförmig gewickeltes Blech oder durch Einzelbleche in der oben beschriebenen Evolventenanordnung (Evolventenblechung) ausgebildet sein. Bei Verwendung von Einzelblechen für den Innenstator kann jedoch auf die Kammstruktur des Blechschnitts verzichtet werden. Dadurch können auch in dem Innenstator Wirbelströme, die durch das den magnetischen Rückschluss bildende Magnetfeld erzeugt werden, reduziert werden.

Selbstverständlich kann auch eine lineare elektrische Maschine vorgesehen sein, bei der der die Statorspulen tragende Statorkörper sich im Inneren eines entsprechenden hülsenförmigen Läufers erstreckt.

## Patentansprüche

1. Statoranordnung für eine lineare elektrische Maschine (1), mit einem im wesentlichen hülsenförmigen Statorkörper (2; 20), der eine Anordnung aus einem oder mehreren Blechen (12; 21) umfasst,
wobei das eine oder die mehreren Bleche (12; 21) sich zwischen einer Innenseite und einer Außenseite des hülsenförmigen Statorkörpers (2; 20) erstrecken, von einer radialen Richtung des Statorkörpers (2; 20) in einer Umfangsrichtung des Statorkörpers abweichen und weiterhin eine Krümmung in Richtung der Umfangsrichtung aufweisen.

2. Statoranordnung nach Anspruch 1, wobei sich das eine oder die mehreren Bleche (12; 21) in axialer Richtung des Statorkörpers (2; 20) erstrecken.

3. Statoranordnung nach Anspruch 1 oder 2, wobei mindestens ein Blech (12) vorgesehen ist, dass spiralförmig um einen inneren Hohlraum (4) des Statorkörpers (2; 20) gewickelt ist.

4. Statoranordnung nach Anspruch 1 oder 2, wobei mehrere Bleche (21) vorgesehen sind, die sich eine sich von einer Innenseite zur Außenseite stetig ändernde Krümmung aufweisen, um eine Evolventenanordnung der Bleche (21) auszubilden.

5. Statoranordnung nach Anspruch 4, wobei die mehreren Bleche (21) jeweils einen kammartigen Blechschnitt mit einer Basis (28) und mit von der Basis abstehenden Zinken (29) aufweisen, wobei ein Basisende (26) der Bleche (21), das den Zinken (29) des kammartigen Blechschnitts gegenüberliegt, an der Innenseite oder Außenseite des zylinderförmigen Statorkörpers (2; 20) angeordnet sind und ein Zinkenende (27), das dem Basisende (26) gegenüberliegt, an der jeweils anderen Innenseite bzw. Außenseite angeordnet ist, wobei die Bleche (21) so aneinander anliegen, dass die Zinken (29) sich in Umfangsrichtung des Statorkörpers (20) überdecken.

6. Statoranordnung nach einem der Ansprüche 1 bis 5, wobei mehrere Statorzahnbleche (10) mit einer Innenausnehmung vorgesehen sind, die in axialer Richtung gestapelt sind und konzentrisch zu der Statoranordnung angeordnet sind, so dass eine Kante der Statorzahnbleche (10) an dem Statorkörper (2; 20) anliegt, so dass die Anordnung gestapelter Statorzahnbleche (10) einen in sich in Umfangsrichtung erstreckenden Statorzahn (9) bildet.

7. Statoranordnung nach Anspruch 6, wobei mehrere Anordnungen gestapelter Statorzahnbleche (10) wechselweise mit mehreren schleifenförmigen, in Umfangsrichtung verlaufenden Statorspulen (11) im inneren Hohlraum des Statorkörpers (2;20) gestapelt sind.

8. Lineare elektrische Maschine (1) mit einer Statoranordnung nach einem der Ansprüche 1 bis 7 und einem in axialer Richtung des Statorkörpers (2; 20) beweglichen Läufer.

9. Lineare elektrische Maschine (1) nach Anspruch 8, wobei die Statoranordnung in einem Innenstator (6) und/oder in einem Außenstator (3) der elektrischen Maschine (1) umfasst ist.
